# EUROPEAN PATENT APPLICATION

(11) **EP 4 560 988 A1**
(43) Date of publication of application: **28.05.2025**
(21) Application number: 24213730.5
(22) Date of filing: 18.11.2024
(51) Int. Cl.: H04L 12/40

(54) **DATA TRANSMISSION OVER DIFFERENT NETWORK CHANNELS**

(30) Priority: 22.11.2023 CN 202311579173
(71) Applicant: BYD Company Limited, Shenzhen, Guangdong 518118 (CN)
(72) Inventor: WANG, Wei, Shenzhen, 518118 (CN); LI, Delin, Shenzhen, 518118 (CN); WU, Chunfen, Shenzhen, 518118 (CN); GUO, Hailong, Shenzhen, 518118 (CN); SHENG, Hejiang, Shenzhen, 518118 (CN)
(74) Representative: Taor, Simon Edward William

(57) **Abstract**

Embodiments of the present disclosure provide a communication method and a related apparatus, which are applied to the field of vehicle communication technologies. In the embodiments of the present disclosure, a first message that needs to be transmitted out through a first network channel can be obtained. When a network status of the first network channel is abnormal, a message type of the first message is determined. If the message type of the first message is a first type, the first message is transmitted through a first channel set. If the message type of the first message is a second type, the first message is transmitted through a second channel set. A quantity of network channels included in the first channel set is less than a quantity of network channels included in the second channel set. In this way, data redundancy can be ensured and a load rate of each network channel does not increase sharply, thereby improving stability and reliability of data transmission, and effectively improving user experience.

## Description

### FIELD

The present disclosure relates to the field of vehicle communication technologies, and in particular, to a communication method and a related apparatus.

### BACKGROUND

With the continuous development of intelligent networking of vehicles and autonomous driving, an amount of communication data of a vehicle network continuously increases, and a reliability requirement for data communication of a controller is increasingly higher. When a vehicle communication network fails to normally perform data transmission, a communication redundancy design is required to ensure reliability of data transmission.

Currently, some vehicles may not be designed with communication redundancy. When a network is abnormal, data that needs to be transmitted out through the network is not duplicated and transmitted in another network, directly resulting in loss of the data, and directly affecting normal operation of a vehicle function related to the data. In some other vehicles, data that a number of controllers need to transmit out is transmitted out through a number of networks, which doubles a load rate of the vehicle network and even affects communication quality, and has a high requirement on a capability of the controller to process data. In this way, data transmission is affected, and user experience is poor.

### SUMMARY

Embodiments of the present disclosure provide a communication method and a related apparatus, which can determine, when a first network channel is in an abnormal network state, a message type of a first message that needs to be transmitted through the first network channel, and transmit the first message through a first channel set or a second channel set. In this way, data redundancy can be ensured and a load rate of a network channel does not increase, thereby improving stability and reliability of data transmission, and effectively improving user experience.

According to a first aspect, an embodiment of the present disclosure provides a communication method, applied to a communication system, the communication system including N network channels, N being an integer and N≥3, the method including:
a first message is obtained, the first message is assigned to be transmitted on a first network channel, and the first network channel is one of the N network channels;
it is determined that a network status of the first network channel is abnormal;
the first message is transmitted through a first channel set if a message type of the first message is a first type, and the first channel set includes at least one network channel in a normal network state in the N network channels; and
the first message is transmitted through a second channel set if the message type of the first message is a second type, the second channel set includes at least two network channels in the normal network state in the N network channels, and a quantity of network channels included in the first channel set is less than a quantity of network channels included in the second channel set.

Optionally, the first message assigned to be transmitted on the first network channel includes a message that has not been transmitted and a message that is transmitted successfully. The message that has not been transmitted may alternatively be a message scheduled to be transmitted on the first network channel.

In this embodiment of the present disclosure, the communication system can transmit the first message through the first channel set or the second channel set according to the message type of the first message when the network status of the first network channel is abnormal. For example, a message may be set to the first type or the second type, and different message types correspond to different backup transmission manners.

In this way, a message type of an unimportant message may be set to the first type. Therefore, during backup transmission, at least one, for example, only one network channel in a normal network state is selected for transmission, to avoid all network channels from performing backup transmission on the message, and ensure that a load rate of the network channel does not increase sharply. A message type of an important message may be set to the second type. In this way, during backup transmission, at least two, for example, all network channels in a normal network state are selected for transmission, to improve a success rate of message transmission. In conclusion, a user can flexibly set the message type of the message, and perform backup transmission on the message, which can prevent data loss and ensure normal operation of a communication function. In addition, it can be ensured that the load rate of the network channel does not increase sharply, thereby improving stability and reliability of data transmission while ensuring data redundancy, and effectively improving user experience.

In a possible implementation of the first aspect, a message of the first type is an ordinary message, and a message of the second type is an important message.

In a possible implementation of the first aspect, the N network channels includes the first network channel and at least one network channel having a same communication manner as the first network channel, and a communication manner of the network channel in the first channel set is the same as the communication manner of the first network channel.

In the foregoing implementation, network channels having the same communication manner are selected for data transmission, which can improve a data transmission speed, can further improve the stability and the reliability of data transmission, and can effectively improve the user experience.

In a possible implementation of the first aspect, the first channel set includes all network channels in the N network channels that are in the normal network state and that have the same communication manner as the first network channel.

In a possible implementation of the first aspect, the network channel in the first channel set is a network channel having a highest priority in the N network channels.

In this way, when the network status of the first network channel is abnormal, a network channel in the normal network state and having the highest priority is selected to transmit the first message, which can improve the stability and the reliability of data transmission, can further improve the data transmission speed, and can effectively improve the user experience.

In another possible implementation of the first aspect, the network channel having the highest priority includes a network channel having a highest bit rate or a highest transmission rate in the network channels having the same communication manner as the first network channel.

In this way, when the network status of the first network channel is abnormal, the network channel having the same communication manner as the first network channel and having the highest bit rate or the highest transmission rate is selected to transmit the first message, which can improve the stability and the reliability of data transmission, can further improve the data transmission speed, and can effectively improve the user experience.

In still another possible implementation of the first aspect, at least two network channels having the same communication manner as the first network channel exist in the N network channels, and communication manners of the network channels in the second channel set are the same as the communication manner of the first network channel, and/or
the N network channels include a network channel having a communication manner different from the communication manner of the first network channel, and the second channel set includes the network channel having the communication manner different from the communication manner of the first network channel in the N network channels.

In still another possible implementation of the first aspect, the second channel set includes all network channels in the N network channels that are in the normal network state and that have a same communication manner as the first network channel.

In the foregoing implementation, network channels having the same communication manner are selected for data transmission, which can improve a data transmission speed, can further improve the stability and the reliability of data transmission, and can effectively improve the user experience.

In still another possible implementation of the first aspect, the N network channels include a network channel having a communication manner different from the communication manner of the first network channel, and
the second channel set further includes at least one network channel in the N network channels that is in the normal network state and that has a communication manner different from the communication manner of the first network channel.

In still another possible implementation of the first aspect, the communication manner of the first network channel is one of CAN communication, CAN-FD communication, Ethernet communication, and fiber communication.

In this way, data transmission may be performed in a number of communication manners, and when a communication manner is abnormal, data transmission may also be performed in another communication manner, which can improve the stability and the reliability of data transmission, and can effectively improve the user experience.

In still another possible implementation of the first aspect, the abnormal network state includes one or more of an error frame, message timeout, and bus off (BUS OFF) occurring in the N network channels.

In this way, the network status of each network channel can be monitored in real time, and when anomalies occur in the network channel, backup transmission can be performed timely. While ensuring the data redundancy, the stability and the reliability of data transmission can be improved, and the user experience can be effectively improved.

In still another possible implementation of the first aspect, the method further includes:
a message list scheduled to be transmitted on the network channel in the first channel set is obtained; and
that the first message is transmitted through a first channel set includes:
a second message is transmitted, in a case that the second message having same content as the first message exists in the message list, through the first channel set by using an earlier moment in an original transmitting moment of the first message and an original transmitting moment of the second message as a moment for transmitting the second message.

In still another possible implementation of the first aspect, the method further includes:
a message list scheduled to be transmitted on the network channels in the second channel set is obtained; and
that the first message is transmitted through a second channel set includes:
a third message is transmitted, in a case that the third message having same content as the first message exists in the message list, through the second channel set by using an earlier moment in an original transmitting moment of the first message and an original transmitting moment of the third message as a moment for transmitting the third message in a case that the third message having a same content as the first message exists in the message list.

In this way, when the message scheduled to be transmitted on the network channel in the normal network state has the same content as the first message, repeated transmitting is not performed, which can avoid resource waste and prevent repeated operations, and can effectively improve the user experience.

In still another possible implementation of the first aspect, the method further includes:
a load rate of each network channel in the N network channels is determined when the network status of the first network channel is abnormal, and the load rate is determined according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel; and
the network channel in the first channel set is a network channel having a lowest load rate of the network channel in the N network channels, the network channels in the second channel set are network channels having a load rate of the network channel lower than a first threshold in the N network channels, and the first threshold is predefined or preset.

In this way, when the network status of the first network channel is abnormal, the load rate of each network channel is determined according to a number of impact factors, and the network channel having the lowest load rate is selected to transmit the first message, which can improve the stability and the reliability of data transmission, can further improve the data transmission speed, and can effectively improve the user experience.

According to a second aspect, an embodiment of the present disclosure provides a processing device, included in a communication system, the communication system including N network channels, N being an integer and N≥3, the processing device including an obtaining unit and a processing unit,
the obtaining unit being configured to obtain a first message, the first message being assigned to be transmitted on a first network channel, and the first network channel being one of the N network channels; and
the processing unit being configured to:
determine that a network status of the first network channel is abnormal;
transmit the first message through a first channel set if a message type of the first message is a first type, the first channel set including at least one network channel in a normal network state in the N network channels; and
transmit the first message through a second channel set if the message type of the first message is a second type, the second channel set including at least two network channels in the normal network state in the N network channels, and a quantity of network channels included in the first channel set being less than a quantity of network included in the second channel set.

In a possible implementation of the second aspect, a message of the first type is an ordinary message, and a message of the second type is an important message.

In a possible implementation of the second aspect, the N network channels includes the first network channel and at least one network channel having a same communication manner as the first network channel, and the communication manner of the network channel in the first channel set is the same as a communication manner of the first network channel.

In a possible implementation of the second aspect, the first channel set includes all network channels in the N network channels that are in the normal network state and that have the same communication manner as the first network channel.

In a possible implementation of the second aspect, the network channel in the first channel set is a network channel having a highest priority in the N network channels.

In another possible implementation of the second aspect, the network channel having the highest priority includes a network channel having a highest bit rate or a highest transmission rate in the network channels having the same communication manner as the first network channel.

In still another possible implementation of the second aspect, at least two network channels having the same communication manner as the first network channel exist in the N network channels, and communication manners of the network channels in the second channel set are the same as the communication manner of the first network channel, and/or

the N network channels include a network channel having a communication manner different from the communication manner of the first network channel, and the second channel set includes the network channel having the communication manner different from the communication manner of the first network channel in the N network channels.

In still another possible implementation of the second aspect, the second channel set includes all network channels in the N network channels that are in the normal network state and that have a same communication manner as the first network channel.

In still another possible implementation of the second aspect, the N network channels include a network channel having a communication manner different from the communication manner of the first network channel, and
the second channel set further includes at least one network channel in the N network channels that is in the normal network state and that has a communication manner different from the communication manner of the first network channel.

In still another possible implementation of the second aspect, the communication manner of the first network channel is one of CAN communication, CAN-FD communication, Ethernet communication, and fiber communication.

In still another possible implementation of the second aspect, the abnormal network state includes one or more of an error frame, message timeout, and bus off (BUS OFF) occurring in the N network channels.

In still another possible implementation of the second aspect, the obtaining unit is further configured to obtain a message list scheduled to be transmitted on the network channel in the first channel set; and
the processing unit is further configured to transmit, in a case that a second message having same content as the first message exists in the message list, the second message through the first channel set by using an earlier moment in an original transmitting moment of the first message and an original transmitting moment of the second message as a moment for transmitting the second message.

In still another possible implementation of the second aspect, the obtaining unit is further configured to obtain a message list scheduled to be transmitted on the network channels in the second channel set; and

the processing unit is further configured to transmit, in a case that a third message having same content as the first message exists in the message list, the third message through the second channel set by using an earlier moment in an original transmitting moment of the first message and an original transmitting moment of the third message as a moment for transmitting the third message in a case that the third message having a same content as the first message exists in the message list.

In still another possible implementation of the second aspect, the processing unit is further configured to determine a load rate of each network channel in the N network channels when the network status of the first network channel is abnormal, and the load rate is determined according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel; and
the network channel in the first channel set is a network channel having a lowest load rate of the network channel in the N network channels, the network channels in the second channel set are network channels having a load rate of the network channel in the N network channels that is lower than a first threshold, and the first threshold is predefined or preset.

According to a third aspect, an embodiment of the present disclosure provides an electronic device, including a processor and a memory. The processor executes instructions stored in the memory, to cause the electronic device to perform the method according to any one of the foregoing first aspect.

Optionally, the electronic device further includes a communication interface. The communication interface is configured to receive and/or transmit data, and/or the communication interface is configured to provide an input and/or an output for the processor.

It should be noted that the foregoing embodiment is described by using a processor (or referred to as a general processor) specified by invoking a computer to perform the method as an example. In a specific implementation process, the processor may alternatively be a dedicated processor. In this case, computer instructions are preloaded in the processor. Optionally, the processor may further include both the dedicated processor and the general processor.

Optionally, the processor and the memory may further be integrated into a device. In other words, the processor and the memory may further be integrated together.

According to a fourth aspect, an embodiment of the present disclosure provides a computer-readable storage medium, storing instructions, the instructions, when executed by an electronic device, causing the electronic device to perform the method according to any one of the foregoing first aspect.

According to a fifth aspect, the present disclosure provides a vehicle, including the foregoing processing device or the foregoing electronic device, to cause the vehicle to perform the method according to any one of the foregoing first aspect.

According to a sixth aspect, the present disclosure provides a computer program product, including computer instructions, the instructions, when executed by an electronic device, causing the electronic device to perform the method according to any one of the foregoing first aspect.

Optionally, the computer program product may be a software installation package or a mirror file. In a case that the foregoing method needs to be used, the computer program product may be obtained and executed on a computing device.

For beneficial effects of the technical solutions provided in the second to sixth aspects of the present disclosure, refer to the beneficial effects of the technical solution of the first aspect. Details are not described herein again.

### BRIEF DESCRIPTION OF THE DRAWINGS

Accompanying drawings that need to be used in the description of embodiments are simply described below.
FIG. 1 is a schematic diagram of an architecture of a communication system according to an embodiment of the present disclosure;
FIG. 2 is a schematic flowchart of a communication method according to an embodiment of the present disclosure;
FIG. 3A is a schematic diagram of a network channel according to an embodiment of the present disclosure;
FIG. 3B is a schematic diagram of another network channel according to an embodiment of the present disclosure;
FIG. 3C is a schematic diagram of another network channel according to an embodiment of the present disclosure;
FIG. 3D is a schematic diagram of another network channel according to an embodiment of the present disclosure;
FIG. 4 is a schematic flowchart of another communication method according to an embodiment of the present disclosure;
FIG. 5 is a schematic diagram of a structure of a processing device according to an embodiment of the present disclosure; and
FIG. 6 is a schematic diagram of a structure of an electronic device according to an embodiment of the present disclosure.

### DETAILED DESCRIPTION

The following describes embodiments of the present disclosure in detail with reference to the accompanying drawings.

The following describes a system architecture to which the embodiments of the present disclosure are applied. It should be noted that system architectures and service scenarios described in the present disclosure are intended to more clearly describe the technical solutions in the present disclosure, and do not limit the technical solutions provided in the present disclosure. A person of ordinary skill in the art may know that as system architectures evolve and new service scenarios emerge, the technical solutions provided in the present disclosure are also applicable to similar technical problems.

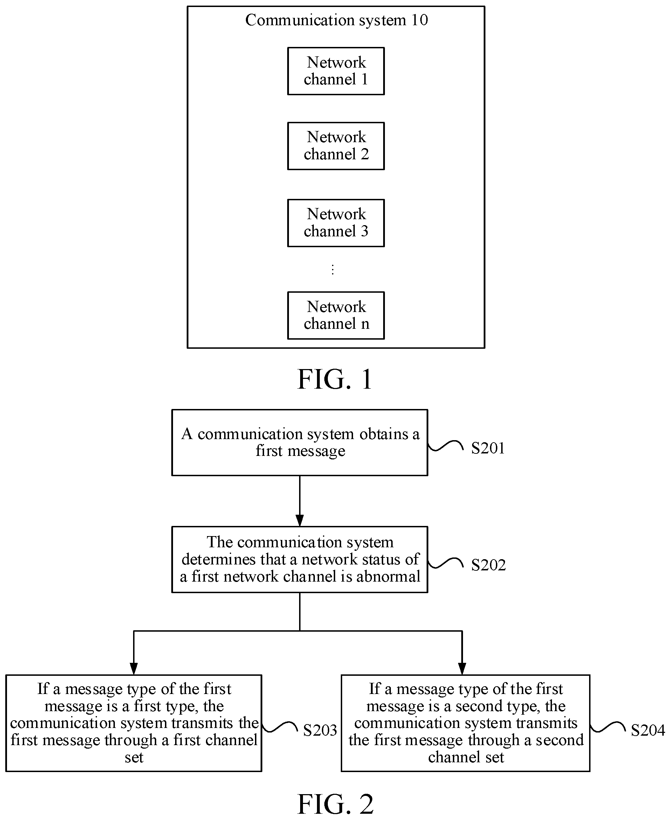

Referring to FIG. 1, FIG. 1 is a schematic diagram of an architecture of a communication system according to an embodiment of the present disclosure. As shown in FIG. 1, a communication system 10 includes a number of network channels. In FIG. 1, a network channel 1, a network channel 2, a network channel 3, and a network channel n are used as an example for description. The following exemplarily describes the communication system and the network channel.

The communication system 10 is a device having data exchange and data processing capabilities. Optionally, the communication system 10 may obtain a message, and may further process the message and control the network channel to transmit the message. For example, the communication system 10 may be a device such as a controller or an electronic device.

The network channel is a channel or a medium having a data transmission capability. The network channel may be configured to transmit the message to the outside. The communication system 10 may have a number of network channels, for example, the network channel 1, the network channel 2, the network channel 3, and the network channel n in FIG. 1. Optionally, a communication manner during data transmission by the network channel may include one of the following forms: CAN, CAN-FD, Ethernet, and optical fiber, or a combination of the foregoing communication forms. For example, the network channel may be a CAN channel, an Ethernet channel, an optical fiber channel, a CAN-FD channel, or the like. That is, there may be a number of ports on the communication system 10. For example, there may be a number of ports such as Ethernet ports or CAN ports on the communication system 10.

Optionally, the communication system 10 has a number of network channels having a same communication manner. That is, some of the number of network channels included in the communication system 10 may have the same communication manner. For example, the communication system 10 includes a total of five network channels, which may include three CAN network channels and two Ethernet channels, or five network channels of other network types.

Further, the network channels having the same communication manner may be network channels having different communication transmission parameters but the same communication manner. For example, the network channels having the same communication manner may be CAN network channels of different Baud rates or Ethernet channels of different rates, for example, a 100M Ethernet channel and a 1000M Ethernet channel.

As a possible implementation, the communication system 10 may obtain a first message that is assigned to be transmitted on a first network channel. When determining that a network status of the first network channel is abnormal, the communication system 10 transmits the first message through a first channel set if a message type of the first message is a first type, and transmits the first message through a second channel set if a message type of the first message is a second type.

In this embodiment of the present disclosure, the communication system can transmit the first message through the first channel set or the second channel set according to the message type of the first message when the network status of the first network channel is abnormal. In this way, a message type of an unimportant message may be set to the first type. Therefore, during backup transmission, at least one, for example, only one network channel in a normal network state is selected for transmission, to avoid all network channels from performing backup transmission on the message, and ensure that a load rate of the network channel does not increase sharply. A message type of an important message may be set to the second type. In this way, during backup transmission, at least two, for example, all network channels in a normal network state are selected for transmission, to improve a success rate of message transmission. In conclusion, a user can flexibly set the message type of the message, and perform backup transmission on the message, which can prevent data loss and ensure normal operation of a communication function. In addition, it can be ensured that the load rate of the network channel does not increase sharply, thereby improving stability and reliability of data transmission while ensuring data redundancy, and effectively improving user experience.

For example, an in-vehicle communication scenario is used as an example. Due to current continuous development of intelligent networking of vehicles and autonomous driving, an amount of communication data of a vehicle network continuously increases, and pressure of data communication of the communication system continuously increases. When a vehicle communication network fails to normally perform data transmission, the communication system may select a network channel in the normal network state to transmit a message of the message type of the first type, and select all network channels in the normal network state to transmit a message of the message type of the second type, thereby ensuring the reliability of data transmission through a communication redundancy design and avoiding sharp increasing of the load rate of the network channel.

The following describes the method in the embodiments of the present disclosure in detail.

Referring to FIG. 2, FIG. 2 is a schematic flowchart of a communication method according to an embodiment of the present disclosure. Optionally, the method may be applied to a communication system. For example, the method may be applied to the communication system 10 shown in FIG. 1.

The communication method shown in FIG. 2 may include a number of steps S201 to S204. It should be understood that, for ease of description in the present disclosure, description is provided through an order of steps S201 to S204. However, this method is not necessarily limited to the foregoing execution order. An order of execution, a time of execution, a quantity of times of execution, and the like of the one or more steps are not limited in the embodiments of the present disclosure. Steps S201 to S204 are specifically as follows.

Step S201: A communication system obtains a first message.

The first message is assigned to be transmitted on a first network channel, and the first network channel is one of a number of network channels included in the communication system. Optionally, the first message assigned to be transmitted on the first network channel includes a message that has not been transmitted and a message that is transmitted successfully. The message that has not been transmitted may alternatively be a message scheduled to be transmitted on the first network channel.

The communication system is a device having data exchange and data processing capabilities. Optionally, the communication system may obtain a message, and may further process the message and transmit the message through a network channel. For example, the communication system may be a controller. The communication system may include a number of network channels. The network channels may be configured to transmit the message to the outside. For the related description of the communication system, reference may be made to the related description of FIG. 1. In some embodiments, a quantity of network channels included in the communication system is represented as M, and M is an integer and M≥2. That is, M=2, M=3, or the like. Optionally, in some embodiments, M may alternatively be an integer and M≥3.

The network channel is a channel or a medium having a data transmission capability. A communication manner during data transmission by the network channel may include one or more of the following communication manners: CAN, CAN-FD, Ethernet, optical fiber, or the like. In a case that the communication system includes a number of communication manners, the communication system may perform data transmission in the number of communication manners, and when a communication manner is abnormal, data transmission may also be performed in another communication manner, which can improve stability and reliability of data transmission, and can effectively improve user experience.

The number of network channels may be represented through a number of ports on the communication system. The ports are exits for the communication system to communicate with the outside, and are configured to perform communication. For example, the communication system may include a number of ports such as Ethernet ports or CAN ports.

Optionally, communication manners of some of the M network channels included in the communication system may be the same. Further, the network channels having the same communication manner may be network channels having different network channel parameters but the same communication manner.

Step S202: The communication system determines that a network status of a first network channel is abnormal.

During operation, the network channel may have a number of network statuses. For example, the network status may be normal or abnormal. The abnormal herein includes, but is not limited to, one or more of abnormal conditions such as an error frame, message timeout, and bus off (BUS OFF) occurring in the network channel. As a possible implementation, the communication system may monitor the network status of each network channel in the number of network channels, to determine the network status of the network channel.

When the network status of the network channel is abnormal, the communication system needs to perform, on another network channel, backup transmission on the message that is assigned to be transmitted on the first network channel. When the communication system performs backup transmission, a message type of the message is related to a backup transmission manner of the message. The message type of the message may be represented as one or more attributes of the message, and the message may be classified into messages of a number of types based on the attributes.

Using an example in which the message type includes a first type and a second type, as a possible implementation, the message may include a first field. When the first field takes a first value, the message type is the first type. When the first field takes a second value, the message type is the second type. Further, the message type may be determined through a number of attributes. For example, the message type is determined through a combination of values of the first field and a second field. In a case that the first field takes the second value and the second field takes a third value, the message type is the first type. It may be understood that the first type and the second type in the present disclosure are exemplary description made to distinguish different message types. In a specific implementation process, a message of the first type may be an ordinary message, and a message of the second type may be an important message (or referred to as a special message). Optionally, in some scenarios, the first type may include more than one type, and the second type may also include more than one type.

The following describes a backup transmission manner with reference to step S203 and step S204 by using an example in which the message type includes the first type and the second type.

Step S203: If a message type of the first message is a first type, the communication system transmits the first message through a first channel set.

Specifically, the first message is a message assigned to be transmitted on the first network channel. When the network status of the first network channel is abnormal, if the message type of the first message is the first type, the first message is transmitted through the first channel set. The first channel set includes at least one network channel in the normal network state in the number of network channels included in the communication system.

For ease of understanding, several possible implementations of the first channel set are listed below.

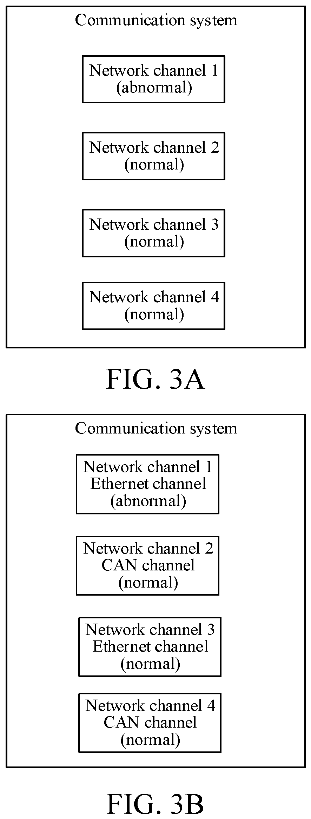

In Implementation 1, the first channel set includes at least one network channel in the normal network state in the number of network channels. Referring to FIG. 3A, FIG. 3A is a schematic diagram of a network channel according to an embodiment of the present disclosure. For example, as shown in FIG. 3A, the communication system includes a network channel 1 to a network channel 4. When the network channel 1 fails, the first channel set is at least one network channel in the normal network state in the remaining three network channels, that is, any one or more network channels in the normal network state in the network channel 2 to the network channel 4.

In Implementation 2, the first channel set includes a network channel having the same communication manner as the first network channel. The number of network channels include the first network channel and at least one network channel having the same communication manner as the first network channel. Referring to FIG. 3B, FIG. 3B is a schematic diagram of another network channel according to an embodiment of the present disclosure. For example, as shown in FIG. 3B, the communication system includes a network channel 1 to a network channel 4, where the network channel 1 and the network channel 3 are Ethernet channels, and the network channel 2 and the network channel 4 are CAN channels. When the network channel 1 fails, the first channel set includes a network channel having the same communication manner as the first network channel, that is, the first channel set includes the network channel 3 in FIG. 3B. In this way, the network channel having the same communication manner is selected for data transmission, which can improve a data transmission speed, and can further improve the stability and reliability of data transmission.

Further, the first channel set includes all network channels in the number of network channels that are in the normal network state and that have the same communication manner as the first network channel.

For example, the communication system includes a network channel 1 to a network channel 6, where the network channel 1, the network channel 3, and the network channel 5 are Ethernet channels, and the network channel 2, the network channel 4, and the network channel 6 are CAN channels. When the network channel 1 fails, the first channel set includes all network channels having the same communication manner as the first network channel, that is, the first channel set includes the network channel 3 and the network channel 5.

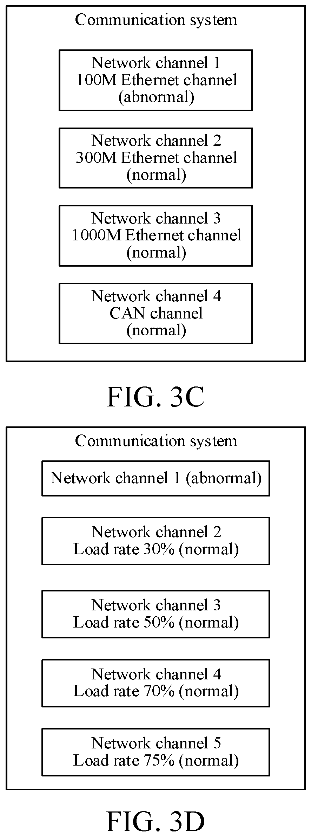

In Implementation 3, the first channel set includes a network channel having a highest priority in the network channels in the normal network state in the number of network channels. Optionally, the communication system may prioritize each network channel in the number of network channels. The network channel having the highest priority may be a network channel having a highest bit rate or a highest transmission rate in the network channels having the same communication manner as the first network channel. Referring to FIG. 3C, FIG. 3C is a schematic diagram of another network channel according to an embodiment of the present disclosure. For example, as shown in FIG. 3C, the communication system includes a network channel 1 to a network channel 4, where the network channel 1 to the network channel 3 are Ethernet channels, and the network channel 4 is a CAN channel. When the network channel 1 (that is, a 100M Ethernet channel) fails, the network channel 2 to the network channel 4 are in the normal network state. The first channel set includes a network channel having a highest priority in the network channel 2 to the network channel 4, for example, includes a network channel having a higher transmission rate in the network channel 2 (that is, a 300M Ethernet channel) and the network channel 3 (that is, a 1000M Ethernet channel). Therefore, the first channel set includes the network channel 3 (that is, the 1000M Ethernet channel) in FIG. 3C.

The priority is a parameter of a priority level that the communication system determines for transmitting data through one or more of the number of network channels. During backup transmission, a network channel having a high priority may be selected for backup transmission. Optionally, the priority of the network channel may be preset by the user or determined according to a network channel parameter.

For example, for ease of understanding, Table 1 shows a priority table of a number of possible network channels.

**Table 1 Priority table of a number of network channels**

| Network channel | Communication manner | Transmission rate | Priority |
|---|---|---|---|
| Network channel 1 | Ethernet | 100M | 4 |
| Network channel 2 | Ethernet | 600M | 2 |
| Network channel 3 | Ethernet | 300M | 3 |
| Network channel 4 | Ethernet | 1000M | 1 |

As shown in Table 1, using an example in which the priorities 1, 2, ..., n of the network channels decrease in sequence, the priority of the network channel 1 is 4, the priority of the network channel 2 is 2, the priority of the network channel 3 is 3, and the priority of the network channel 4 is 1. The priority of the network channel 4 is the highest. For example, when the network channel 1 fails and the network channels 2, 3, and 4 are in the normal network state, since the priority of the network channel 4 is the highest, the first message may be transmitted through the network channel 4.

Optionally, there may be more than one network channel having the highest priority. In this case, the first channel set includes more than one network channel having the highest priority.

In this way, the network channel having the highest priority is selected to transmit the first message, which can improve the stability and reliability of data transmission, and can further improve the data transmission speed.

In Implementation 4, the first channel set may further include a network channel having a lowest load rate in the number of network channels. Optionally, the communication system may determine a load rate of each network channel in the number of network channels when the network status of the first network channel is abnormal. The communication system may determine the load rate of the network channel according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel. For example, referring to FIG. 3D, FIG. 3D is a schematic diagram of another network channel according to an embodiment of the present disclosure. For example, as shown in FIG. 3D, the communication system includes five network channels, that is, a network channel 1 to a network channel 5. The network channel 1 is abnormal. In this case, the remaining four network channels are in the normal network state. A load rate of the network channel 2 is 30%, a load rate of the network channel 3 is 50%, a load rate of the network channel 4 is 70%, and a load rate of the network channel 5 is 75%. In this case, the first channel set may further include the network channel 2, that is, the first channel set includes the network channel 2 in FIG. 3D. The communication system may transmit the first message through the network channel 2.

In this way, the load rate of each network channel is determined according to a number of channel parameters, and the network channel having the lowest load rate is selected to transmit the first message, which can improve the stability and reliability of data transmission, and can further improve the data transmission speed.

It should be understood that the foregoing implementations are exemplary examples, there may be more implementations in a specific implementation process, and in addition, a number of implementations may be combined.

Optionally, the network channel in the first channel set belongs to a number of network channels. The network channel in the first channel set is in the normal network state, the network channel in the first channel set has the same communication manner as the first network channel, and the network channel in the first channel set is the network channel having the lowest load rate in network channels that meet the foregoing conditions. In this way, when the network status of the first network channel is abnormal, the network channel having the same communication manner as the first network channel and the lowest load rate is selected to transmit the first message, which can better improve the stability and reliability of data transmission, can better improve the data transmission speed, and can effectively improve the user experience.

In a possible implementation, the first message is a message scheduled to be transmitted through the first network channel at a first moment, the message type of the first message is the first type, and the communication system obtains a first message list scheduled to be transmitted on the network channel in the first channel set. If there is a second message having same content as the first message in the first message list, the communication system uses an earlier moment in an original transmitting moment of the first message and an original transmitting moment of the second message as a moment for transmitting the second message. The communication system transmits the second message through the first channel set.

For example, at a sixth second, the communication system detects that the network channel 1 is abnormal and the network channel 2 is normal. The first channel set includes the network channel 2. The communication system obtains a message 1 scheduled to be transmitted through the network channel 1 at a tenth second. A message type of the message 1 is the first type. The communication system obtains a first message list scheduled to be transmitted through the network channel 2. For example, the first message list includes a message 2, a message 3, and a message 4. The communication system detects that the message 2 has same content as the message 1. The message 2 is scheduled to be transmitted through the network channel 2 at a fifteenth second. The tenth second is an earlier moment in the tenth second and the fifteenth second. In this case, the communication system controls the network channel 2 to transmit the message 2 at the tenth second.

For another example, at a sixth second, the communication system detects that the network channel 1 is abnormal and the network channel 2 and the network channel 3 are normal. The first channel set includes the network channel 2 and the network channel 3. The communication system obtains a message 1 scheduled to be transmitted through the network channel 1 at a tenth second. A message type of the message 1 is the first type. The communication system obtains a first message list scheduled to be transmitted through the first channel set, that is, the first message list scheduled to be transmitted through the network channel 2 and the network channel 3. For example, the first message list includes a message 2, a message 3, and a message 4. The communication system detects that the message 2 and the message 4 have same content as the message 1. The message 2 is scheduled to be transmitted through the network channel 2 at a fifteenth second, and the message 4 is scheduled to be transmitted through the network channel 3 at an eighth second. The eighth second is an earliest moment in the tenth second, the fifteenth second, and the eighth second. In this case, the communication system controls the network channel 2 to transmit the message 2 at the eighth second, and controls the network channel 3 to transmit the message 4 at the eighth second. In other words, for any network channel in the normal network state, a message having the same content is not repeatedly transmitted.

In this way, when a message scheduled to be transmitted on a network channel in the normal network state has the same content as the first message, repeated transmission is not performed, which can avoid a waste of resources and prevent repeated operations, and can effectively improve the user experience.

Step S204: If the message type of the first message is a second type, the communication system transmits the first message through a second channel set.

Step S204 describes another backup transmission manner. When the network status of the first network channel is abnormal, if the message type of the first message is the second type, the first message is transmitted through the second channel set. The second channel set includes at least two network channels in the normal network state in the number of network channels included in the communication system. For example, a quantity of network channels in the second channel set is represented as K, and K is an integer greater than 1. It should be noted that a quantity of network channels included in the first channel set is less than the quantity of network channels included in the second channel set.

For ease of understanding, several possible implementations of the second channel set are listed below.

In Implementation 1, the second channel set includes at least two network channels in the normal network state in the number of network channels. For example, the second channel set includes all network channels in the normal network state in the number of network channels. For example, as shown in FIG. 3A, the communication system includes a network channel 1 to a network channel 4. When the network channel 1 fails, the second channel set includes all network channels in the normal network state in the remaining three network channels. That is, the second channel set includes two or all of the network channel 2 to the network channel 4 in FIG. 3A. For another example, the communication system includes ten network channels, and the network channel 1 is abnormal. In this case, the remaining nine network channels are in the normal network state. In this case, the second channel set may include two or all of the remaining nine network channels. In this way, a transmission success rate of the first message can be improved.

It should be noted that for ease of explaining a difference in this backup transmission manner, K is limited to an integer greater than 1. In some possible scenarios, if the communication system includes only the first network channel and a third network channel, when the first network channel fails, all network channels in the normal network state include only the third network channel, and the second channel set includes the third network channel. That is, this solution is also applicable to a case that K=1.

In Implementation 2, the network channels in the second channel set have the same communication manner as the first network channel.

For example, the communication system includes M network channels, and at least two network channels in the M network channels have the same communication manner as the first network channel. For example, N network channels in the M network channels have the same communication manner as the first network channel.

Further, the second channel set includes all network channels in the normal network state in the N network channels, where N is an integer and N≥3.

In this case, M and N may be the same or different. When M>N, there are still network channels in the M network channels having communication manners different from the communication manner of the N network channels. For example, as shown in FIG. 3C, the communication system includes a network channel 1 to a network channel 4, where the network channel 1 to the network channel 3 are Ethernet channels, the network channel 4 is a CAN channel, and communication manners of the network channel 1 to the network channel 3 are the same. When the network channel 1 fails, the network channel 2 to the network channel 4 are in the normal network state, and the second channel set includes network channels in the normal network state in the network channel 1 to the network channel 3, that is, the second channel set includes the network channel 2 and the network channel 3 in FIG. 3C. For another example, the communication system includes ten network channels, and the network channel 1 is abnormal. In this case, the remaining nine network channels are in the normal network state. Three of the remaining nine network channels have the same communication manner as the network channel 1. In this case, the second channel set may include the three network channels having the same communication manner as the network channel 1. In this way, the network channel having the same communication manner is selected for data transmission, which can improve a data transmission speed, and can further improve the stability and reliability of data transmission.

Further, the second channel set includes a network channel having a communication manner different from that of the first network channel. For example, when M>N, there are still network channels in the M network channels having communication manners different from the communication manner of the N network channels. In this case, the second channel set includes at least one network channel having a communication manner different from the communication manner of the first network channel, or the second channel set includes the N network channels and at least one network channel having a communication manner different from the communication manner of the first network channel. For example, the communication system includes ten network channels, and the network channel 1 is abnormal. In this case, the remaining nine network channels are in the normal network state. Three of the remaining nine network channels have the same communication manner as the network channel 1. In this case, the second channel set may include the three network channels having the same communication manner as the network channel 1, and/or the second channel set may include at least one of the remaining six network channels.

In Implementation 3, the second channel set may further include a network channel having a load rate lower than a first threshold in the number of network channels. Optionally, the communication system may determine a load rate of each network channel in the number of network channels when the network status of the first network channel is abnormal. The communication system may determine the load rate of the network channel according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel. Optionally, the first threshold is used for representing a condition that the load rate of the network channel needs to meet. The first threshold is predefined or pre-specified. For example, the first threshold may be a value lower than 60%, for example, 55%, 40%, or the like. For example, as shown in FIG. 3D, the communication system includes five network channels, that is, a network channel 1 to a network channel 5. The network channel 1 is abnormal. In this case, the remaining four network channels are in the normal network state. A load rate of the network channel 2 is 30%, a load rate of the network channel 3 is 50%, a load rate of the network channel 4 is 70%, a load rate of the network channel 5 is 75%, and the first threshold is a value lower than 60%. In this case, the second channel set may include the network channel 2 and the network channel 3.

In this way, the load rate of each network channel is determined according to a number of impact factors, and the network channel having the load rate lower than the first threshold is selected to transmit the first message, which can improve the stability and reliability of data transmission, and can further improve the data transmission speed.

It should be understood that the foregoing implementations are exemplary examples, there may be more implementations in a specific implementation process, and in addition, a number of implementations may be combined.

Optionally, the network channels in the second channel set belong to a number of network channels. The network channels in the second channel set are in the normal network state, the network channels in the second channel set have the same communication manner as the first network channel, and the network channels in the second channel set are the network channels having the load rate lower than the first threshold in network channels that meet the foregoing conditions. In this way, when the network status of the first network channel is abnormal, the network channel having the same communication manner as the first network channel and the load rate lower than the first threshold is selected to transmit the first message, which can better improve the stability and reliability of data transmission, can better improve the data transmission speed, and can effectively improve the user experience.

In a possible implementation, the first message is a message scheduled to be transmitted through the first network channel at a first moment, the message type of the first message is the second type, and the communication system obtains a second message list scheduled to be transmitted on the network channel in the second channel set. If there is a third message having same content as the first message in the second message list, the communication system uses an earlier moment in an original transmitting moment of the first message and an original transmitting moment of the third message as a moment for transmitting the third message. The communication system transmits the third message through the second channel set.

For example, the communication system includes four network channels. At a sixth second, the communication system detects that the network channel 1 is abnormal, and the network channel 2, the network channel 3, and the network channel 4 are normal. The communication system obtains a message 1 scheduled to be transmitted through the network channel 1 at a tenth second. A message type of the message 1 is the second type. The communication system obtains a second message list scheduled to be transmitted through the network channel 2, the network channel 3, and the network channel 4. For example, the second message list includes ten messages such as a message 2, a message 3, a message 4, a message 5, and the like. The communication system detects that the message 4 has same content as the message 1. The message 4 is scheduled to be transmitted through the network channel 3 at an eighth second. The eighth second is an earlier moment in the eighth second and the tenth second. In this case, the communication system controls the network channel 3 to transmit the message 4 at the eighth second.

For another example, at a sixth second, the communication system detects that the network channel 1 is abnormal and the network channel 2 and the network channel 3 are normal. The first channel set includes the network channel 2 and the network channel 3. The communication system obtains a message 1 scheduled to be transmitted through the network channel 1 at a tenth second. A message type of the message 1 is the first type. The communication system obtains a second message list scheduled to be transmitted through the network channel 2, the network channel 3, and the network channel 4. For example, the second message list includes ten messages such as a message 2, a message 3, a message 4, a message 5, and the like. The communication system detects that the message 4 and the message 6 have same content as the message 1. The message 4 is scheduled to be transmitted through the network channel 3 at an eighth second, and the message 6 is scheduled to be transmitted through the network channel 4 at a twelfth second. The eighth second is an earliest moment in the eighth second, the tenth second, and the twelfth second. In this case, the communication system controls the network channel 3 to transmit the message 4 at the eighth second, and controls the network channel 4 to transmit the message 6 at the eighth second. In other words, for any network channel in the normal network state, a message having the same content is not repeatedly transmitted.

In this way, when a message scheduled to be transmitted on a network channel in the normal network state has the same content as the first message, repeated transmission is not performed, which can avoid a waste of resources and prevent repeated operations, and can effectively improve the user experience.

In a possible implementation, when M=2, in a case that the network channel 1 is abnormal, regardless of whether the first message is of the first type or the second type, the communication system performs backup transmission on the first message through the network channel 2. In this case, the first message is of the first type or the first message is of the second type, the network channels selected in two backup manners of the communication system are the same, but selection logics corresponding to the two backup manners are different.

In the embodiment shown in FIG. 2, the communication system can transmit the first message through the first channel set or the second channel set according to the message type of the first message when the network status of the first network channel is abnormal. In this way, a message type of an unimportant message may be set to the first type. Therefore, during backup transmission, at least one, for example, only one network channel in a normal network state is selected for transmission, to avoid all network channels from performing backup transmission on the message, and ensure that a load rate of the network channel does not increase sharply. A message type of an important message may be set to the second type. In this way, during backup transmission, at least two, for example, all network channels in a normal network state are selected for transmission, to improve a success rate of message transmission. In conclusion, a user can flexibly set the message type of the message, and perform backup transmission on the message, which can prevent data loss and ensure normal operation of a communication function. In addition, it can be ensured that the load rate of the network channel does not increase sharply, thereby improving stability and reliability of data transmission while ensuring data redundancy, and effectively improving user experience.

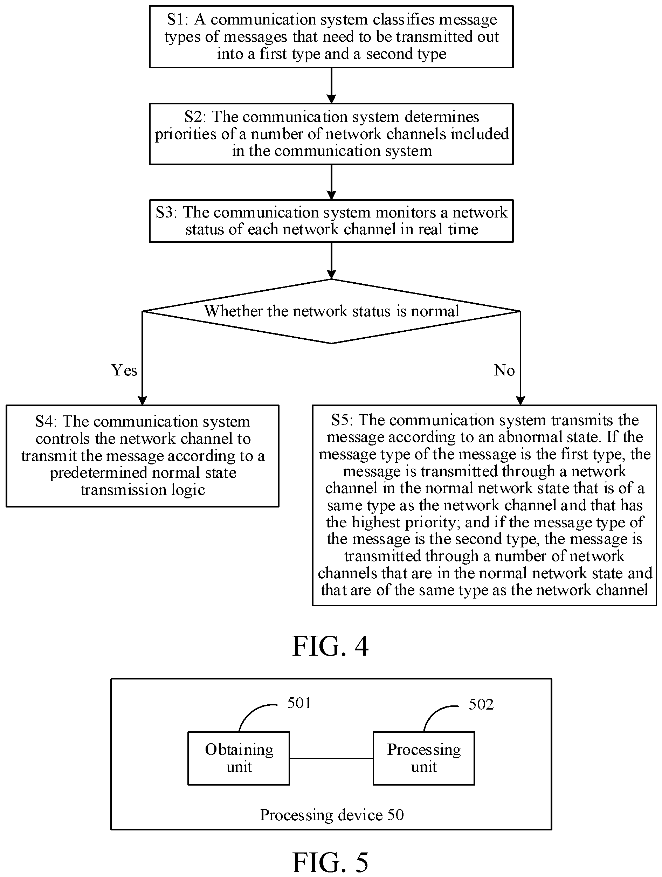

A number of possible solutions are included in the embodiment shown in FIG. 2. For ease of understanding, one of the possible solutions is described below. It should be understood that, for some terms, logic, and the like in the solution shown in FIG. 4, refer to the embodiment shown in FIG. 2.

Referring to FIG. 4, FIG. 4 is a schematic flowchart of another communication method according to an embodiment of the present disclosure. The method includes the following steps.

S 1: A communication system classifies message types of messages that need to be transmitted out into a first type and a second type.

The first type is different from the second type. Optionally, a message of the second type may be a message having a higher importance level or a message selected by the user.

S2: The communication system determines priorities of a number of network channels included in the communication system.

In some embodiments, the communication system may include M network channels, and M is an integer and M≥2, that is, M=2, M=3, or the like. Optionally, in some embodiments, M may alternatively be an integer and M≥3.

Optionally, the communication system may determine the priority of the network channel according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel.

S3: The communication system monitors a network status of each network channel in real time.

Step S4 is performed when the network channel is in the normal network state, and step S5 is performed when the network channel is in the abnormal network state.

The abnormal network state includes one or more of abnormal conditions such as an error frame, message timeout, and bus off (BUS OFF) in the number of network channels.

S4: The communication system controls the network channel to transmit the message according to a predetermined normal state transmission logic.

S5: The communication system transmits the message according to an abnormal status. If the message type of the message is the first type, the message is transmitted through a network channel in the normal network state that is of the same type as the network channel and that has the highest priority; and if the message type of the message is the second type, the message is transmitted through a number of network channels that are in the normal network state and that are of the same type as the network channel.

The network channels of the same type may be network channels having the same communication manner.

In the embodiment shown in FIG. 4, the communication system may classify the message types of the messages that need to be transmitted out into the first type and the second type, and determine the priorities of the number of network channels included in the communication system. The communication system may monitor the network status of each network channel in real time. When the network status is normal, the message is transmitted according to a predetermined normal state transmission logic. When the network status is abnormal, the message is transmitted according to the abnormal state. If the message type of the message is the first type, the message is transmitted through a network channel in the normal network state that has the same communication manner as the network channel and that has the highest priority. If the message type of the message is the second type, the message is transmitted through a number of network channels that are in the normal network state and that have the same communication manner as the network channel. In this way, backup transmission may be performed on the first message, to prevent data loss, and ensure that the communication function normally operates. In addition, it can be ensured that the load rate of the network channel does not increase. While ensuring data redundancy, the stability and the reliability of data transmission can be improved, and the user experience is effectively improved.

The foregoing describes the method in the embodiments of the present disclosure in detail, and the following provides a device in the embodiments of the present disclosure.

Referring to FIG. 5, FIG. 5 is a schematic diagram of a structure of a processing device according to an embodiment of the present disclosure. The processing device 50 may include an obtaining unit 501 and a processing unit 502. The processing device 50 is configured to implement the foregoing communication method, for example, the communication method in the embodiment shown in FIG. 2 and FIG. 4.

It should be noted that the foregoing division of a number of units is merely logical division according to functions, and is not intended as a limitation on a specific structure of the processing device 50. In a specific implementation, some functional modules may be subdivided into more fine functional modules, and some functional modules may be combined into a functional module.

In a possible implementation, the processing device is included in a communication system, and the communication system includes N network channels, N being an integer and N≥3.

The obtaining unit 501 is configured to obtain a first message, the first message is assigned to be transmitted on a first network channel, and the first network channel is one of N network channels.

The processing unit 502 is configured to:
determine that a network status of the first network channel is abnormal;
transmit the first message through a first channel set if a message type of the first message is a first type, the first channel set including at least one network channel in a normal network state in the N network channels; and
transmit the first message through a second channel set if the message type of the first message is a second type, the second channel set including at least two network channels in the normal network state in the N network channels, and a quantity of network channels included in the first channel set being less than a quantity of network included in the second channel set.

In a possible implementation, a message of the first type is an ordinary message, and a message of the second type is an important message.

In a possible implementation, the N network channels includes the first network channel and at least one network channel having a same communication manner as the first network channel, and the communication manner of the network channel in the first channel set is the same as a communication manner of the first network channel.

In a possible implementation, the first channel set includes all network channels in the N network channels that are in the normal network state and that have the same communication manner as the first network channel.

In a possible implementation, the network channel in the first channel set is a network channel having a highest priority in the N network channels.

In a possible implementation, the network channel having the highest priority includes a network channel having a highest bit rate or a highest transmission rate in the network channels having the same communication manner as the first network channel.

In a possible implementation, at least two network channels having the same communication manner as the first network channel exist in the N network channels, and communication manners of the network channels in the second channel set are the same as the communication manner of the first network channel, and/or
the N network channels include a network channel having a communication manner different from the communication manner of the first network channel, and the second channel set includes the network channel having the communication manner different from the communication manner of the first network channel in the N network channels.

In a possible implementation, the second channel set includes all network channels in the N network channels that are in the normal network state and that have a same communication manner as the first network channel.

In a possible implementation, the N network channels include a network channel having a communication manner different from the communication manner of the first network channel, and
the second channel set further includes at least one network channel in the N network channels that is in the normal network state and that has a communication manner different from the communication manner of the first network channel.

In a possible implementation, the communication manner of the first network channel is one of CAN communication, CAN-FD communication, Ethernet communication, and fiber communication.

In a possible implementation, the abnormal network state includes one or more of an error frame, message timeout, and bus off (BUS OFF) occurring in the N network channels.

In a possible implementation, the obtaining unit 501 is further configured to obtain a message list scheduled to be transmitted on the network channel in the first channel set; and
the processing unit 502 is further configured to transmit, in a case that a second message having same content as the first message exists in the message list, the second message through the first channel set by using an earlier moment in an original transmitting moment of the first message and an original transmitting moment of the second message as a moment for transmitting the second message.

In a possible implementation, the obtaining unit 501 is further configured to obtain a message list scheduled to be transmitted on the network channels in the second channel set; and
the processing unit 502 is further configured to transmit, in a case that a third message having same content as the first message exists in the message list, the third message through the second channel set by using an earlier moment in an original transmitting moment of the first message and an original transmitting moment of the third message as a moment for transmitting the third message.

In a possible implementation, the processing unit 502 is further configured to determine a load rate of each network channel in the N network channels when the network status of the first network channel is abnormal, and the load rate is determined according to one or more of a communication manner of the network channel, a quantity of messages that have not been transmitted of the network channel, estimated duration required by the network channel to transmit all messages, a bit rate of the network channel, a transmission rate of the network channel, or message delay duration of the network channel; and
the second network channel is a network channel having a lowest load rate of the network channel in the N network channels, and a number of third network channels are network channels having a load rate of the network channel lower than a first threshold in the N network channels, and the first threshold is pre-defined or preset.

It should be noted that the foregoing units (the obtaining unit 501 and the processing unit 502) are configured to perform relevant steps of the foregoing method. For example, the obtaining unit 501 is configured to execute related content of step S201, and the processing unit 502 is configured to execute related content of S202 to S204.

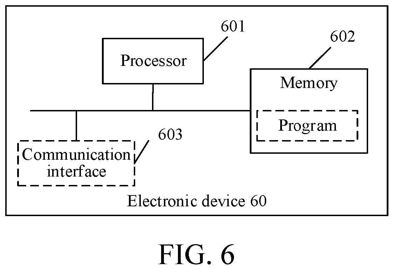

FIG. 6 is a schematic diagram of a structure of an electronic device according to an embodiment of the present disclosure. The electronic device is a device having a processing capability. The device herein may be an entity device, such as a server (for example, a rack-mounted server), a host, or may be a virtual device, such as a virtual machine or a container.

As shown in FIG. 6, an electronic device 60 includes: a processor 601, a memory 602, and one or more programs, and may include a communication interface 603. It should be understood that a quantity of processors and memories in the electronic device 60 is not limited in the present disclosure.

The processor 601 is a module that performs operations, and may include a central processing unit (central processing unit, CPU), a graphics processing unit (graphics processing unit, GPU), a micro processor (micro processor, MP), a digital signal processor (digital signal processor, DSP), a micro controller unit (micro controller unit, MCU), or one or more integrated circuits configured to control execution of the foregoing solution programs.

The memory 602 is configured to provide a storage space, and the storage space optionally stores application data, user data, an operating system, a computer program, and the like. The memory 602 may be a read-only memory (read-only memory, ROM) or another type of static storage device that can store static information and a static instruction; or a random access memory (random access memory, RAM) or another type of dynamic storage device that can store information and an instruction; or may be an electrically erasable programmable read-only memory (Electrically Erasable Programmable Read-Only Memory, EEPROM), a compact disc read-only memory (Compact Disc Read-Only Memory, CD-ROM) or another compact disc storage medium, an optical disc storage medium (including a compact disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that is accessible to a computer, but is not limited thereto.

The memory 602 may exist independently, and connect to the processor 601 by using the bus. The memory 602 may alternatively be integrated in the processor 601.

The communication interface 603 is configured to provide information input or output for the at least one processor, and/or the communication interface 603 may be configured to receive externally transmitted data and/or transmit data to the outside. The communication interface 603 may be a wired link interface including such as an Ethernet cable, or may be a wireless link (such as Wi-Fi, Bluetooth, general wireless transmission, and other wireless communication technologies) interface. Optionally, the communication interface 603 may further include a transmitter (such as a radio frequency transmitter or an antenna), a receiver, or the like coupled to the interface.

In this embodiment of the present disclosure, the one or more programs are stored in the memory 602 in the form of program code, and are configured to be executed by the processor 601. The programs include instructions for implementing the steps of the foregoing communication method, for example, the communication method shown in FIG. 2 and FIG. 4. That is, the memory 602 stores executable instructions, and the processor 601 executes the executable instructions to implement the foregoing communication method, for example, the communication method in the embodiments of FIG. 2 and FIG. 4. That is, the memory 602 stores instructions for performing the communication method.

Alternatively, the memory 602 stores executable instructions, and the processor 601 executes the executable instructions to implement functions of one or more units (or devices) of the foregoing obtaining unit and the foregoing processing unit respectively, to implement the communication method.

An embodiment of the present disclosure further provides a vehicle, including the foregoing processing device or the foregoing electronic device, to cause the vehicle to implement the foregoing communication method, for example, the communication method in the embodiments of FIG. 2 and FIG. 4.

An embodiment of the present disclosure further provides a computer program product including instructions. The computer program product may be software or a program product that includes instructions and can be run on a computing device or stored in any usable medium. The computer program instructions are configured to implement the foregoing communication method, for example, the communication method in the embodiments of FIG. 2 and FIG. 4.

An embodiment of the present disclosure further provides a computer-readable storage medium. The computer-readable storage medium includes instructions, and the instructions are for implementing the foregoing communication method, for example, the communication method in the embodiments of FIG. 2 and FIG. 4.

The computer-readable storage medium may be any usable medium that can be stored in an electronic device, or may be a data storage device such as a data center that includes one or more usable media. The usable medium may be a magnetic medium (for example, a soft disk, a hard disk, or a magnetic tape), an optical medium (for example, a DVD), a semiconductor medium (for example, an SSD), or the like.

In embodiments of the present disclosure, the words, such as "exemplary" and "for example", are used to represent giving an example, an illustration, or a description. Any embodiment or design solution described as an "exemplary" or "for example" in the present disclosure should not be explained as being more preferred or having more advantages than another embodiment or design solution. To be precise, the use of the words such as "exemplary" or "for example" is intended to present a related concept in a specific manner.

In embodiments of the present disclosure, "at least one" refers to one or more, and "a number of" refers to two or more. "At least one of the following" or a similar expression thereof refers to any combination of these items, including one item or any combination of a number of items. For example, at least one of a, b, or c may represent: a, b, c, "a and b", "a and c", "b and c", or "a, b, and c", where a, b, and c may be one or more. "And/or" describes an association relationship between associated objects and represents that three relationships may exist. For example, A and/or B may represent the following three cases: only A exists, both A and B exist, and only B exists, where A and B may be singular or plural. The character "/" generally represents that the associated object is in an "or" relationship.

Unless otherwise described, ordinal terms such as "first" and "second" described in the embodiments of the present disclosure are intended to distinguish a number of objects, and are not intended to limit an order, a time sequence, priorities, or importance degrees of the number of objects. For example, the first channel set and the second channel set are merely for ease of description, but do not indicate that deployment orders, importance levels, and the like of the first channel set and the second channel set are different.

A person of ordinary skill in the art may understand that all or some of the steps of the foregoing embodiments may be implemented by hardware, or may be implemented a program instructing related hardware. The program may be stored in a computer-readable storage medium. The storage medium may be: a ROM, a magnetic disk, or an optical disc.

At last, it should be noted that: the foregoing embodiments are merely intended for describing the technical solutions of the present disclosure, but not for limiting the present disclosure. Although the present disclosure is described in detail with reference to the foregoing embodiments, it should be appreciated by a person skilled in the art that, modifications may still be made to the technical solutions described in the foregoing embodiments, or equivalent replacements may be made to the part of the technical features; and such modifications or replacements will not cause the essence of corresponding technical solutions to depart from the scope of the technical solutions in the embodiments of the present disclosure.

## Claims

1. A communication method, applied to a communication system, the communication system comprising N network channels, N being an integer and N≥3, the method comprising:
obtaining a first message, the first message being assigned to be transmitted on a first network channel, and the first network channel being one of the N network channels;
determining that a network status of the first network channel is abnormal;
transmitting the first message through a first channel set if a message type of the first message is a first type, the first channel set comprising at least one network channel in a normal network state in the N network channels; and
transmitting the first message through a second channel set if the message type of the first message is a second type, the second channel set comprising at least two network channels in the normal network state in the N network channels, and a quantity of network channels comprised in the first channel set being less than a quantity of network channels comprised in the second channel set.

2. The method according to claim 1, wherein the N network channels comprises the first network channel and at least one network channel having a same communication manner as the first network channel, and a communication manner of the network channel in the first channel set is the same as the communication manner of the first network channel.

3. The method according to claim 2, wherein the first channel set comprises all network channels in the N network channels that are in the normal network state and that have the same communication manner as the first network channel.

4. The method according to claim 1 or 2, wherein the network channel in the first channel set is a network channel having a highest priority in the N network channels.

5. The method according to claim 1 or 2, wherein
at least two network channels having the same communication manner as the first network channel exist in the N network channels, and communication manners of the network channels in the second channel set are the same as the communication manner of the first network channel; and/or
the N network channels comprise a network channel having a communication manner different from the communication manner of the first network channel, and the second channel set comprises the network channel having the communication manner different from the communication manner of the first network channel in the N network channels.

6. The method according to claim 1, wherein the second channel set comprises all network channels in the N network channels that are in the normal network state and that have a same communication manner as the first network channel.

7. The method according to claim 6, wherein the N network channels comprise a network channel having a communication manner different from the communication manner of the first network channel, and
the second channel set further comprises at least one network channel in the N network channels that is in the normal network state and that has a communication manner different from the communication manner of the first network channel.

8. The method according to any one of claims 1 to 7, wherein the communication manner of the first network channel is one of CAN communication, CAN-FD communication, Ethernet communication, and fiber communication.

9. The method according to one any of claims 1 to 8, wherein the abnormal network state comprises one or more of an error frame, message timeout, and bus off, BUS OFF, occurring in the N network channels.

10. The method according to any one of claims 1 to 9, further comprising:
obtaining a message list scheduled to be transmitted on the network channel in the first channel set; and
the transmitting the first message through a first channel set comprises:
transmitting, in a case that a second message having same content as the first message exists in the message list, the second message through the first channel set by using an earlier moment in an original transmitting moment of the first message and an original transmitting moment of the second message as a moment for transmitting the second message.

11. The method according to any one of claims 1 to 9, further comprising:
obtaining a message list scheduled to be transmitted on the network channels in the second channel set; and
the transmitting the first message through a second channel set comprises:
transmitting, in a case that a third message having same content as the first message exists in the message list, the third message through the second channel set by using an earlier moment in an original transmitting moment of the first message and an original transmitting moment of the third message as a moment for transmitting the third message.

12. A processing device, comprised in a communication system, the communication system comprising N network channels, N being an integer and N≥3, the processing device comprising an obtaining unit and a processing unit;
the obtaining unit being configured to obtain a first message, the first message being assigned to be transmitted on a first network channel, and the first network channel being one of the N network channels; and
the processing unit being configured to:
determine that a network status of the first network channel is abnormal;
transmit the first message through a first channel set if a message type of the first message is a first type, the first channel set comprising at least one network channel in a normal network state in the N network channels; and
transmit the first message through a second channel set if the message type of the first message is a second type, the second channel set comprising at least two network channels in the normal network state in the N network channels, and a quantity of network channels comprised in the first channel set being less than a quantity of network channels comprised in the second channel set.

13. An electronic device, comprising a processor and a memory, the memory storing a program, and the program comprising instructions for performing the method according to any one of claims 1 to 11.

14. A computer-readable storage medium, configured to store a computer program, and the computer program comprising instructions for performing the method according to any one of claims 1 to 11.

15. A vehicle, comprising the processing device according to claim 12 or the electronic device according to claim 13.
